**Europäisches Patentamt**

**European Patent Office**

**Office européen des brevets**

(11) Veröffentlichungsnummer: **0 413 149 A2**

# EUROPÄISCHE PATENTANMELDUNG

(21) Anmeldenummer: **90113568.1**

(22) Anmeldetag: **16.07.90**

(51) Int. Cl.⁵: **B29C 45/17, B29C 45/26**

(30) Priorität: **12.08.89 DE 3926681**

(43) Veröffentlichungstag der Anmeldung:
**20.02.91 Patentblatt 91/08**

(84) Benannte Vertragsstaaten:
**DK ES FR GB IT NL**

(71) Anmelder: **Klöckner Ferromatik Desma GmbH
Riegeler Strasse 4
D-7831 Malterdingen(DE)**

(72) Erfinder: **Landwehr, Reinhard
Heimstättenweg 15A
D-2807 Achim(DE)**
Erfinder: **Oster, Lothar
Verdener Strasse 35
D-2807 Achim-Uesen(DE)**

(74) Vertreter: **Röther, Peter, Dipl.-Phys.
Patentabteilung, Klöckner-Werke AG,
Klöcknerstrasse 29
D-4100 Duisburg 1(DE)**

(54) **Schnellspannvorrichtung für Formenteile von Spritzgiessmaschinen.**

(57) Die Erfindung betrifft eine Schnellspannvorrichtung für Formenteile von Spritzgießmaschinen mit einer oder mehreren Formstation(en), deren Form (jeweils) aus mindestens zwei Formenrahmenteilen (15), einem Bodenstempel (9) und einem Oberstempel (21), beispielsweise in Form eines Leistens, besteht, wobei jedes dieser Formenteile (9, 15, 20) an einem zum zweckgerichteten Öffnen und Schließen der jeweiligen Form im Raum verfahrbaren Trägerelement (7, 13, 18) angekoppelt ist und diese Kopplung zwischen jedem Formenteil (9, 15, 20) und seinem zugehörigen Trägerelement (7, 13, 18) mittels einer mit einer geeigneten - beispielsweise hydraulischen - Antriebseinheit ver- und entriegelbaren Klemmvorrichtung (11, 23) - beispielsweise einer Klemmvorrichtung (11) aus einer in einem Sackloch betätigbaren Spreizhülse oder einer Klemmvorrichtung (23) aus einer nicht rotationssymmetrischen Bohrung und einem in dieser Bohrung um seine Längsachse drehbaren Zugbolzen mit nicht rotationssymmetrischem Bolzenkopf - und einer darin integrierten und/oder zusätzlichen Positionierhilfe (12, 24) erfolgt.

F i g.1a

# SCHNELLSPANNVORRICHTUNG FÜR FORMENTEILE VON SPRITZGIESSMASCHINEN

Die Erfindung betrifft eine Schnellspannvorrichtung für Formenteile von Spritzgießmaschinen gemäß den Merkmalen des Oberbegriffs des Patentanspruchs 1.

Spritzgießmaschinen zum Herstellen von Körpern aus elastomerem Material in den verschiedensten - auch mehrfarbigen - Ausgestaltungen, beispielsweise direkt an Schuhschäfte angespritzte Sohlen oder einzeln oder satzweise gespritzte Dichtungen, sind seit langem Stand der Technik. Sie weisen eine oder mehrere Formstation(en) auf, von denen jede mindestens eine Form aus wenigstens zwei Formenrahmenteilen (Formenhälften), einem Bodenstempel und einem Oberstempel, der ggf. als einen Schuhschaft tragender Leisten ausgebildet ist, trägt. Jede dieser mehrteiligen Formen wird zum Ausbilden des mittels einer oder mehrerer Spritzeinheit(en) mit fließfähigem Kunststoff oder Gummi auszuspritzenden Hohlraums zunächst aus einer geöffneten Ausgangsstellung im dreidimensionalen Raum zusammengefahren und nach der Ausbildung des zu produzierenden Körpers und vor dessen Entnahme aus der Form in die geöffnete Ausgangsstellung zurückgefahren, wobei die diese Bewegungen verursachenden Mittel primär auf verschiedene Trägerelemente wirken, an denen die vorgenannten Formenteile jeder Form kraftschlüssig, aber auswechselbar befestigt sind. Eine solche Befestigung ist schon aus dem Grunde geboten, daß für jeden zu produzierenden Körper aus elastomerem Material eine spezielle Form erforderlich ist, beispielsweise bei der Herstellung von direkt an Schuhschäfte angespritzten Sohlen für jeden Schuhtyp und jede Größe eines solchen Typs mindestens je eine spezielle Form für einen rechten und einen linken Schuh, daß jedoch häufig von derartigen Körpern zu einem bestimmten Zeitpunkt jeweils nur kleine Serien herzustellen sind, so daß die Formen und damit die vorgenannten Formenteile sehr oft ausgewechselt werden müssen, ohne daß dies einen völligen Umbau der Spritzgießmaschine notwendig macht. Der Vorteil einer solchen Befestigung gilt ebenso dem einfacheren Auswechseln von im Betrieb verschlissenen Formen oder einzelnen Formenteilen oder von Formen bzw. Formenteilen, die - mehr oder weniger häufig - einer gründlichen Reinigung von qualitätsmindernden Rückständen des eingespritzten Materials unterzogen werden müssen, ohne daß die gesamte Reinigung an der stillgelegten Spritzgießmaschine durchgeführt werden muß.

Die einfachste und nach dem Stand der Technik gängigste Art und Weise solcher Befestigungen sind geeignet angepaßte mehrfache Schraubverbindungen zwischen jedem Formenteil und seinem Trägerelement. Das Lösen bzw. Anziehen derartiger Schraubverbindungen erfordert allerdings einerseits ein ausreichend weites Auseinanderfahren aller Formenteile, was bei der Mehrzahl der in Rede stehenden gattungsgemäßen Spritzgießmaschinen, die normalerweise zum Herstellen von per Hand manipulierbaren Körpern aus elastomerem Material verwendet werden, eine größere Dimensionierung jeder Formstation als die für die Produktentnahme unbedingt notwendige bedingt, und andererseits einen erheblichen Zeitaufwand und damit einen unerwünschten unwirtschaftlichen Maschinenstillstand der Spritzgießmaschine, insbesondere dann, wenn es sich um eine solche mit mehreren Formstationen handelt, beispielsweise um eine solche zum Direktanspritzen von Sohlen an Schuhschäfte mit der durchaus üblichen Zahl von 24 auf einem Drehtisch angeordneten Formstationen.

Daher wurde bereits in der DE-PS 35 16 486 vorgeschlagen, zumindest für die Formenrahmenteile (Formenhälften) eine einfacher zu lösende bzw. zu spannende Befestigungsvorrichtung gegenüber dem jeweils zugehörigen Trägerelement, d.h. in diesem Fall gegenüber dem in der jeweiligen Formenaufnahme verfahrbar installierten Führungsrahmen, einzusetzen, und zwar pro Formenhälfte einerseits eine an einem - dem von einem vor der betriebsbereiten Spritzgießmaschine befindlichen Betrachter aus gesehen hinteren - Ende der Formenhälfte angebrachte und in Längsrichtung der Formenhälfte - d.h. in Blickrichtung des vorgenannten Betrachters - wirksame Steckverbindung aus einem mit der Formenhälfte kraftschlüssig verbundenen Bolzen und einer korrespondierenden Bohrung im Führungsrahmen und andererseits eine am anderen - vorderen - Ende der Formenhälfte installierte und senkrecht zur Längsrichtung der Formenhälfte wirksame Knebelverbindung aus einem in einer Bohrung in der Formenhälfte axial gegen eine Federkraft und außerdem radial bewegbaren Bolzen mit seitlichen Zapfen an seinem unteren Ende und einer korrespondierenden Bohrung mit einer eingeschraubten Buchse im Führungsrahmen, wobei diese Buchse entsprechend den vorgenannten Zapfen ausgebildete Nuten mit zunächst zur Bohrungsachse parallelem und dann zu ihr schrägem Verlauf aufweist, so daß ein Eindrücken des Bolzens in die Buchse und ein anschließendes Verdrehen um einen gewissen Winkel - der normalerweise deutlich geringer als ein rechter Winkel ist - eine kraftschlüssige Verbindung zwischen Formenhälfte und Führungsrahmen herstellt. Auch diese Befestigungsvorrichtung erfordert allerdings für die Betätigung des Bolzens mittels eines geeigneten Werkzeugs einen merklichen Mindestabstand zwischen den verschiedenen Formenteilen, der denjenigen für die Produktentnahme in vielen Fällen deutlich übertrifft, und einen nicht zu vernachlässigenden Zeitaufwand für ein Betätigen des Bolzens mit ausreichender Sorgfalt, um einen übermäßigen Verschleiß der Knebelverbindung weitgehend zu vermeiden.

Für Spritzgießmaschinen, die nur mit zweiteiligen Formwerkzeugen arbeiten, wurde weiterhin in der DE-GM 82 37 075.3 vorgeschlagen, jede Formwerkzeughälfte auf ihrer dem jeweiligen Formträger zuzuwendenden Rückseite mit maximal zwei, vorzugsweise vier Spannbolzen auszurüsten, die in entsprechende Bohrungen im Formträger eintauchen und dort mittels Arretiereinrichtungen fixiert werden, wobei diese Arretiereinrichtungen in weiteren, die vorgenannten Bohrungen schneidenden und an der Seite des Formträgers auslaufenden Bohrungen angeordnet und betätigbar sind, insbesondere in Form von hydraulisch betätigten und mit entsprechenden Öffnungen in den Spannbolzen zusammenwirkenden Schiebern. Die Positionierung kann in diesen Fällen entweder mittels bekannter Paare von Führungsbolzen/Führungsbohrungen zwischen den beiden Formwerkzeughälften oder mittels auf der Rückseite jeder Formwerkzeughälfte befindlicher kegelstumpfförmiger Zentriersockel im Zusammenwirken mit entsprechenden Vertiefungen im jeweils zugehörigen Formträger erfolgen. Voraussetzung für eine vorstehend beschriebene Befestigungsvorrichtung ist allerdings eine ausreichende Mindestgröße der Formträger für die Aufnahme der vorgenannten Bohrungen für die nicht beliebig klein zu dimensionierenden Spannbolzen und Arretiereinrichtungen ohne Beeinträchtigung der Stabilität des Formträgers und ein ausreichendes Platzangebot zur Installation der ebenfalls nicht beliebig klein zu dimensionierenden Hydraulikantriebe der Arretiereinrichtungen auf mindestens zwei Seitenflächen jedes Formträgers. Bei den derzeit in Rede stehenden Spritzgießmaschinen mit nur zweiteiligen Formwerkzeugen, von denen normalerweise die eine Formwerkzeughälfte starr mit dem Gestell der Spritzgießmaschine verbunden und allein die andere Formwerkzeughälfte linear verfahrbar ist, lassen sich die vorgenannten Voraussetzungen für einen weiten Größenbereich der herzustellenden Körper aus elastomerem Material bzw. der zugehörigen Formwerkzeuge konstruktiv verhältnismäßig einfach erfüllen. Bei den an sich interessierenden Spritzgießmaschinen mit mindestens vier Formenteilen für jede Form, die im allgemeinen nur zur Herstellung von Körpern aus elastomerem Material in von Hand manipulierbaren Dimensionen eingesetzt werden, wobei diese Dimensionen auch für die erforderlichen Formenteile gelten, ist eine solche Erfüllung der oben genannten Voraussetzungen jedoch allenfalls in Ausnahmefällen möglich, da es bei diesen Maschinen wegen der Vielzahl der bewegten Teile normalerweise gerade angestrebt wird, zur Vermeidung von übermäßigem Energieaufwand und übermäßigen mechanischen Belastungen einer kompletten Formstation oder Spritzgießmaschine möglichst geringe Massen auf möglichst kurzen Wegen zu verschieben, womit auch die Abmessungen der Trägerelemente für die Formenteile im allgemeinen für die Erfüllung der oben genannten Voraussetzungen zu gering werden - abgesehen davon, daß im vorliegenden Fall im Gegensatz zu einer Spritzgießmaschine mit nur zweiteiligem Formwerkzeug auch noch eine wechselseitige räumliche Beeinträchtigung der Außenseiten aller Formenteile auftritt.

Die vorliegende Erfindung hat sich daher die Aufgabe gestellt, auch für Spritzgießmaschinen mit mehr als jeweils zwei Formenteilen für eine Spritzgießform eine Schnellspannvorrichtung zur Arretierung der Formenteile an den jeweiligen Trägerelementen einer Formstation zur Verfügung zu stellen, mit deren Hilfe ein einfaches und vor allem einen sehr geringen Zeitaufwand erforderndes Auswechseln von Formenteilen an Spritzgießmaschinen durchgeführt werden kann.

Die Erfindung löst diese Aufgabe mit Hilfe der Merkmale des kennzeichnenden Teils des Patentanspruchs 1.

Dabei erweist es sich als besonders vorteilhaft, daß die Kopplung zwischen jedem Formenteil und seinem zugehörigen Trägerelement mittels einer mit einer geeigneten Antriebseinheit ver- und entriegelbaren Klemmvorrichtung und einer darin integrierten und/oder einer zusätzlichen Positionierhilfe erfolgt, da auf diese Weise lediglich die geeignete Antriebseinheit zum Entriegeln der Klemmvorrichtung betätigt werden muß, um dann mit einer geometrisch einfachen Bewegung von Hand oder eines geeigneten Hilfsmittels ein Formenteil von seinem Trägerelement entfernen, ein neues Formenteil auf entsprechend einfache Weise auf sein Trägerelement aufsetzen und dieses Formenteil anschließend durch die Betätigung der geeigneten Antriebseinheit zum Verriegeln der Klemmvorrichtung auf seinem Trägerelement verriegeln zu können. Bei einer gattungsgemäßen Spritzgießmaschine zum Direktansohlen von auf Leisten aufgezogenen Schuhschäften mit einer durchaus üblichen Bestückung von 24 auf einem Drehtisch angeordneten Formstationen mit jeweils zwei Leisten auf einem Leistendrehkopf als Oberstempelanordnung läßt sich beispielsweise die Rüstzeit zum Auswechseln aller Formenteile mit den erfindungsgemäßen Schnellspannvorrichtungen gegenüber den bisher üblichen Schraubverbindungen von ca. 30 - 45 min auf ca. 5 min reduzieren. Da mit einer solchen Maschine jedoch ca. 800 Schuhe pro Stunde hergestellt werden, bedeutet der Einsatz der erfindungsgemäßen Schnellspannvorrichtungen in diesem Fall das Vermeiden eines Produktionsausfalles von mindestens 300 Schuhen bei einem vollständigen Formenwechsel an einer einzigen Maschine - der an solchen Maschinen durchaus öfter als einmal pro Achtstundenschicht üblich ist.

Vorteilhaft ist bei der erfindungsgemäßen Schnellspannvorrichtung auch, daß ihr Einsatz keine aufwendigen Neukonstruktionen der üblichen Trägerelemente und Temperierplatten erfordert, insbesondere dann, wenn die Schnellspannvorrichtung in einer ganz besonders vorteilhaften Ausführungsform mindestens eine Anordnung aus einer aus dem Trägerelement - ggf. einschließlich einer auf ihm angeordneten Temperierplatte - in Richtung auf das anzukoppelnde Formenteil herausragenden stiftartigen Anordnung und einer korrespondierenden Öffnung im anzukoppelnden Formenteil als ver- und entriegelbare Klemmvorrichtung aufweist, wobei deren Ver- und Entriegelung durch eine von einer geeigneten Antriebseinheit gesteuerte beschränkte axiale Bewegung der stiftartigen Anordnung oder eines Teiles davon bewirkt wird. In diesem Fall genügt es im allgemeinen, das jeweilige Trägerelement und/oder eventuelle Temperierplatten mit einfachen oder Gewindebohrungen zu versehen, in denen dann Teile der stiftartigen Anordnung und deren Antrieb oder Teile davon angeordnet werden, wobei gewisse Teile der stiftartigen Anordnung auch kraftschlüssig mit dem Trägerelement verbunden werden können, beispielsweise durch Einschrauben in die Öffnung oder separate Schraubverbindungen nach dem Einsetzen in die Öffnung. Diese Ausführungsform der erfindungsgemäßen Schnellspannvorrichtung erlaubt außerdem vorteilhafterweise, einerseits die stiftartige Anordnung nur so weit aus dem Trägerelement - bzw. der eventuell zugehörigen Temperierplatte - herausstehen zu lassen, daß zum Aufsetzen bzw. Abnehmen eines Formenteils auf das bzw. von dem zugehörige(n) Trägerelement kein unerwünscht weites Auseinanderfahren der Formenteile gegenüber demjenigen zur Entnahme des Endproduktes aus der Form erforderlich ist, und andererseits die geeignete Antriebseinheit von der Rückseite jedes Trägerelements her an der stiftartigen Anordnung angreifen zu lassen, wo keine gegenseitige räumliche Beeinträchtigung der Formenteile untereinander auftritt.

Weitere vorteilhafte Ausgestaltungen der erfindungsgemäßen Schnellspannvorrichtung werden durch die Merkmale der Unteransprüche 8 bis 19 gegeben.

Ausführungsbeispiele der erfindungsgemäßen Schnellspannvorrichtung sind in der Zeichnung dargestellt. Es zeigen:

Fig. 1a: Schnitt durch die schematische Seitenansicht einer Formstation in einer Spritzgießmaschine, deren Form(en) aus jeweils mehr als zwei Formenteilen zusammengesetzt ist/sind.

Fig. 1b: Aufsicht auf die Schnittebene A-A in Fig. 1a - teilweise in durchbrochener Darstellung.

Fig. 2: Klemmvorrichtung 11 als Ausschnitt aus Fig. 1a in vergrößerter Darstellung.

Fig. 3a: Aufsicht auf die parallel zur Bildebene der Fig. 1a liegende Schnittebene B-B aus Fig. 1b in verändertem Maßstab.

Fig. 3b: Aufsicht auf die Schnittebene C-C aus Fig. 3a in vergrößertem Maßstab.

Fig. 4a: Klemmvorrichtung 23 als Ausschnitt aus Fig. 1a in vergrößerter Darstellung.

Fig. 4b: Blick in Richtung des Pfeiles A der Fig. 4a in vergrößertem Maßstab - teilweise durchbrochen dargestellt.

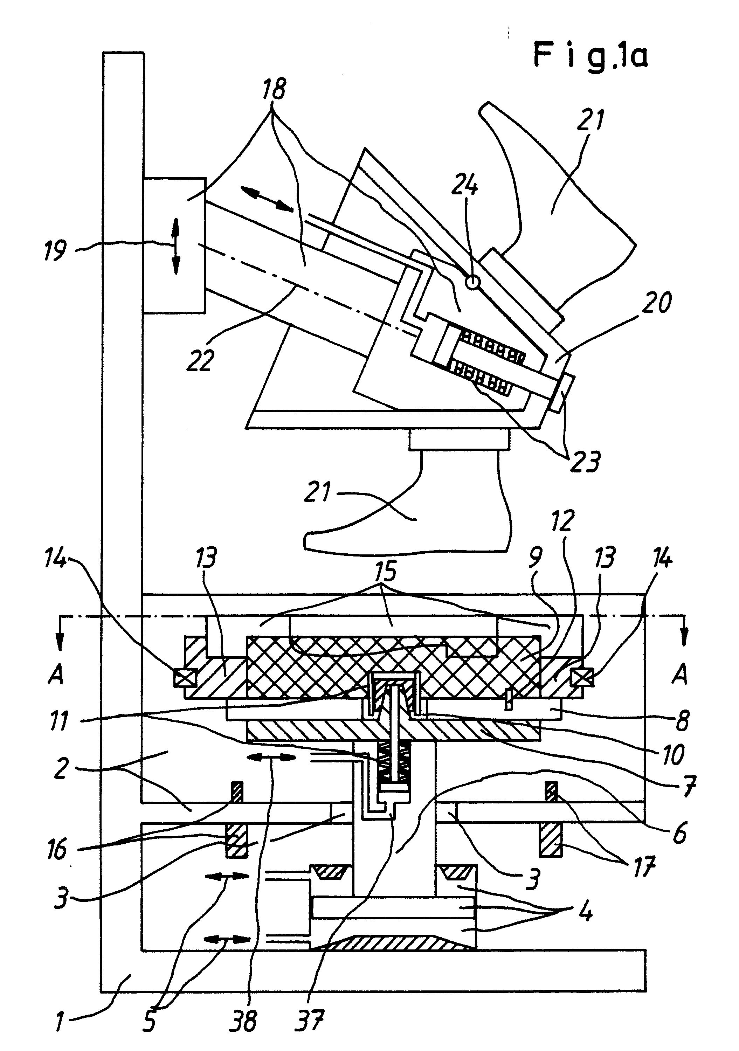

Fig. 1a zeigt zunächst den Rahmen 1 einer zu einer Spritzgießmaschine gehörenden Formstation, wobei der Zusammenhang zwischen dem Rahmen 1 und dem Gestell der Spritzgießmaschine, beispielsweise demjenigen einer Drehtisch-Anordnung für Formstationen, als bekannt vorausgesetzt und daher nicht explizit dargestellt ist. Integraler Bestandteil des Rahmens 1 ist eine mit diesem starr verbundene Formenaufnahme 2, die die Form einer nach oben und nach vorn offenen Wanne mit einer Öffnung 3 in ihrem Bodenbereich aufweist. Rahmen 1 und Formenaufnahme 2 tragen sowohl die Antriebe aller zur Ausbildung einer Spritzgießform erforderlichen Formenteile als auch die mit diesen Antrieben verbundenen und durch sie bewegten Trägerelemente für die verschiedenen Formenteile.

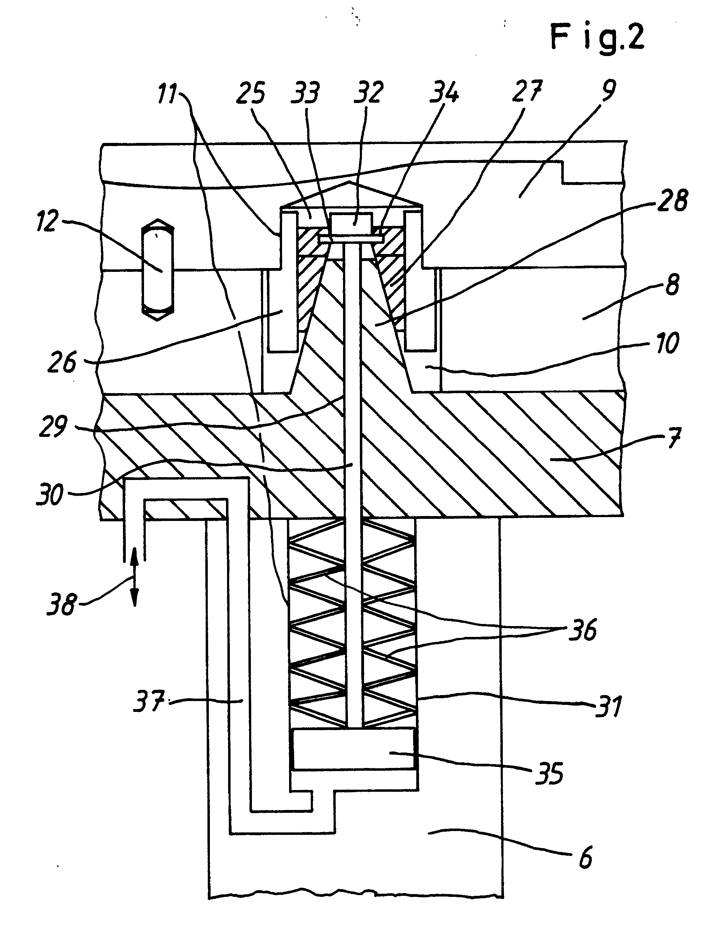

Auf der Bodengruppe des Rahmens 1 ist eine pneumatisch oder hydraulisch zu betätigende Kolben-/Zylinder-Anordnung 4 installiert, deren Beaufschlagung mit einem pneumatischen oder hydraulischen Medium durch die symbolischen Doppelpfeile 5 angedeutet ist. Die Kolbenstange 6 dieser Kolben-/Zylinder-Anordnung 4 ist durch die Öffnung 3 der Formenaufnahme 2 hindurchgeführt und trägt einen Hebetisch 7, der seinerseits auf seiner Oberseite eine kraftschlüssig mit ihm verbundene Temperierplatte 8 und einen darauf aufliegenden Bodenstempel 9 abstützt. Der Bodenstempel 9 ist durch eine Öffnung 10 in der Temperierplatte 8 hindurch mittels einer Klemmvorrichtung 11 mit dem Hebetisch 7 durch Reibschluß fest, aber auswechselbar verbunden, wobei die exakte Lage des Bodenstempels 9 zum Hebetisch 7 bzw. der zugehörigen Temperierplatte 8 durch eine Positioniervorrichtung in Form eines Positionierstiftes 12 gewährleistet wird. Die hier nur angedeutete Klemmvorrichtung 11 aus einer im Bodenstempel 9 befindlichen Sacklochbohrung 25, einer darin kraftschlüssig eingepaßten Hülse 26 aus verschleißfestem Material, einer in die Hülse 26 ein- und ausfahrbaren Spreizhülse 27 und einer die Spreizhülse 27 auf einem mit dem Hebetisch 7 verbundenen kegelstumpfförmigen Dorn 28 verschiebenden pneumatischen oder hydraulischen Kolben-/Zylinder-Anordnung 31 wird in Fig. 2 eingehender dargestellt und weiter unten im Rahmen der Beschreibung dieser Fig. 2 im Detail erläutert.

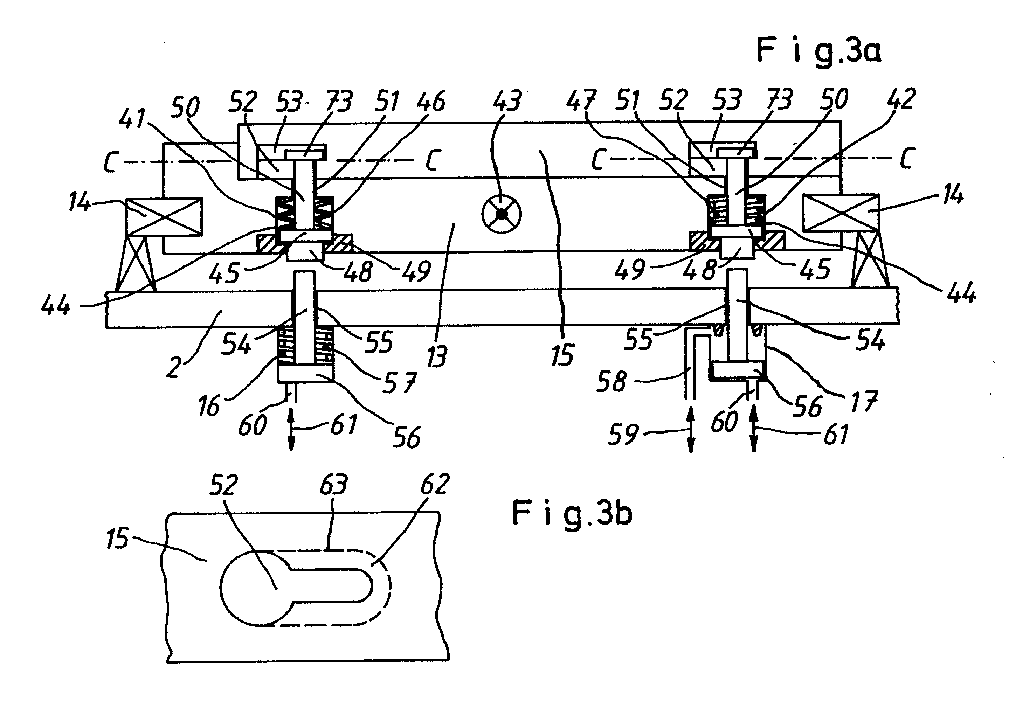

Seitlich des Bodenstempels 9 sind Teile eines in der vorliegenden Darstellung im wesentlichen hinter dem Bodenstempel 9 liegenden Führungsrahmens 13 dargestellt, der auf fest mit der Formenaufnahme 2 verbundenen - hier nur im Querschnitt erkennbaren - Schienen 14 mittels eines nicht explizit dargestellten Antriebs bekannter Art verfahrbar ist und als Trägerelement für ein ebenfalls teilweise dargestelltes Formenrahmenteil 15 dient. An der Formenaufnahme 2 sind - hier in rein schematischer Darstellung - zwei Kolben-/Zylinder-Anordnungen 16, 17 ange ordnet, die in einer vorgegebenen Ausgangsstellung des Führungsrahmens 13 innerhalb der Formenaufnahme 2 als Antriebe von Klemmvorrichtungen zwischen Führungsrahmen 13 und Formenrahmenteil 15 wirken. Die tatsächliche Zuordnung und Wirkungsweise dieser Antriebe und Klemmvorrichtungen wird in den Fig. 3a und 3b im Detail dargestellt und weiter unten entsprechend beschrieben. Vorausgesetzt ist bei der vorliegenden Darstellung, daß die Bildebene eine Spiegelebene ist, so daß das Formenrahmenteil 15 im vorliegenden Falle auch in üblicher Weise als Formenhälfte 15 bezeichnet werden kann.

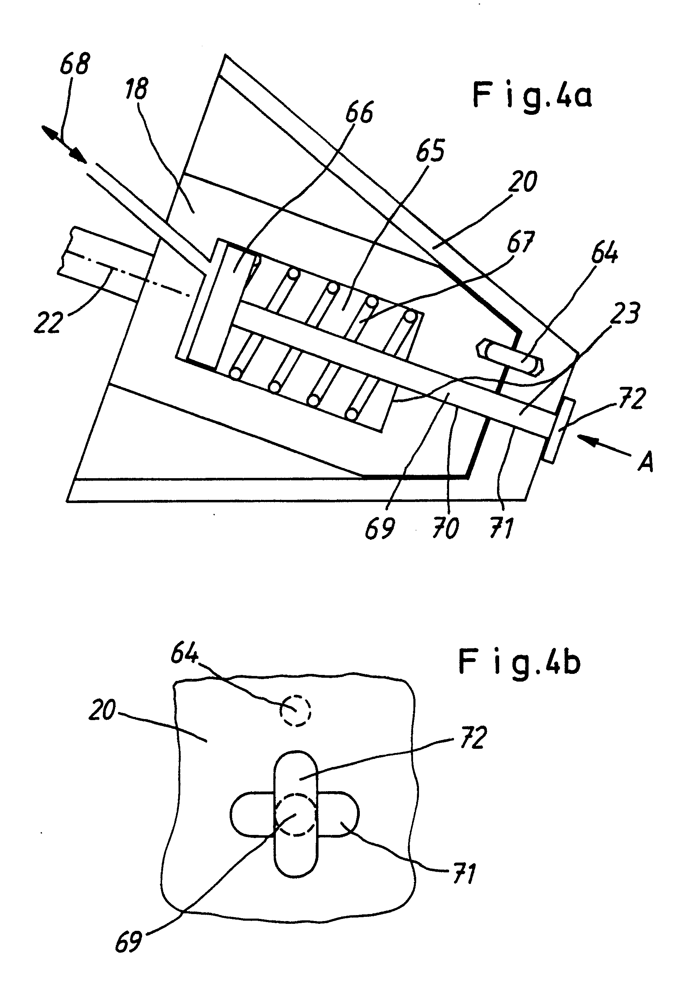

Den oberen Teil der dargestellten Formstation bildet eine Drehkopf-Antriebseinheit 18, die einerseits am Rahmen 1 in vertikaler Richtung verfahrbar ist, was durch den symbolischen Doppelpfeil 19 angedeutet wird, und die andererseits einen Drehkopf 20 mit zwei - oder auch mehreren - auf ihm in Form von Schuhschäfte tragenden Leisten angeordneten Oberstempeln 21 zum Zwecke des wechselseitigen Austausches dieser Oberstempel 21 um die Achse 22 der Drehkopf-Antriebseinheit 18 schwenken kann. Im vorderen Teil der Drehkopf-Antriebseinheit 18 befindet sich eine Klemmvorrichtung 23, die den Drehkopf 20 kraftschlüssig mit der Drehkopf-Antriebseinheit 18 verbindet, wobei die exakte Lage zwischen Drehkopf 20 und Drehkopf-Antriebseinheit 18 hier durch eine zweckentsprechend gestaltete Positioniervorrichtung 24, beispielsweise eine federnd gelagerte Kugel in einem Teil und eine entsprechende Ausnehmung im anderen Teil, erreicht wird. Eine ausführliche Darstellung der Klemmvorrichtung 23 und einer weiteren geeigneten Positioniervorrichtung zeigt die Fig. 4a, deren eingehende Beschreibung ebenfalls weiter unten folgt.

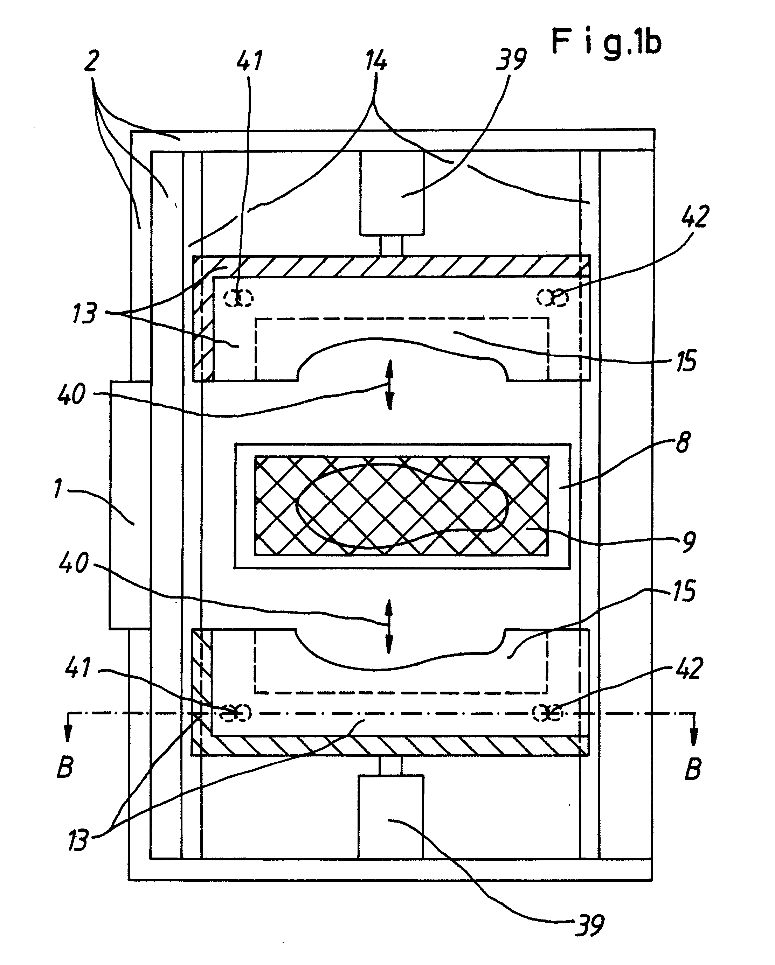

Fig. 1b zeigt in der Aufsicht auf die Schnittebene A-A in Fig. 1a zunächst ebenfalls den Rahmen 1 in Verbindung mit der Formenaufnahme 2, innerhalb der sich einerseits im Zentrum der Bodenstempel 9 auf der Temperierplatte 8 be findet und die andererseits ein Paar paralleler Schienen 14 senkrecht zur Längsachse des Bodenstempels 9 trägt, auf dem mittels geeigneter Antriebe bekannter Art, beispielsweise hier schematisch dargestellter pneumatischer oder hydraulischer, gegensinnig arbeitender Kolben-/Zylinder-Anordnungen 39, zwei symmetrisch zum Bodenstempel 9 angeordnete - hier teilweise in durchbrochener Darstellung gezeigte - Führungsrahmen 13 verfahren werden, deren Bewegungsmöglichkeiten durch die symbolischen Doppelpfeile 40 angedeutet sind. Diese Führungsrahmen 13, die ggfs. mit einer hier nicht dargestellten Temperiervorrichtung bekannter Art versehen sein können, tragen je ein(e) Formenrahmenteil (Formenhälfte) 15, von denen jede(s) mittels je zweier - hier in durchbrochener Darstellung in Aufsicht gezeigter - Klemmvorrichtungen 41, 42 mit dem zugehörigen Führungsrahmen 13 für einen jeweils vorgegebenen Zeitraum kraftschlüssig und positioniert verbunden ist. Die Klemmvorrichtungen 41, 42 und ihre Wirkungsweise werden an Hand der Fig. 3a und 3b weiter unten in dieser Beschreibung im einzelnen erläutert.

Fig. 2 zeigt aus der Fig. 1a die Kolbenstange 6 zur Unterstützung des Hebetisches 7, der darauf kraftschlüssig befestigten Temperierplatte 8, wobei die Befestigung von bekannter Art und daher nicht explizit dargestellt ist, und des wiederum darauf aufliegenden Bodenstempels 9 sowie den hier an anderer Stelle als in Fig. 1a angeordneten Positionierstift 12, der in einem der Teile (9 oder 8) im Preßsitz eingefügt ist und im anderen Teil (8 oder 9) im Gleitsitz geführt wird. Außerdem ist aus Fig. 1a die Klemmvorrichtung 11 im Detail dargestellt.

Diese Klemmvorrichtung 11 weist zunächst im Bodenstempel 9 eine Bohrung 25 auf, in die unter der Voraussetzung, daß der Bodenstempel 9 in nicht unüblicher Weise aus einer Aluminiumlegierung besteht, eine Hülse 26 aus verschleißfestem Material eingepaßt ist, wobei diese Einpassung in bekannter Art, beispielsweise durch Einschrauben oder Einpressen, erfolgt. In der Hülse 26 sitzt eine Spreizhülse 27, die andererseits auf einem mit dem Hebetisch 7 verbundenen kegelstumpfförmigen Dorn 28 aufsitzt, wobei sich die gesamte vorgenannte Anordnung aus Hülse 26, Spreizhülse 27 und Dorn 28 zumindest teilweise in einer durchgehenden Öffnung 10 innerhalb der Temperierplatte 8 befindet. Der Dorn 28 ist hier als einstückig mit dem Hebetisch 7 verbunden dargestellt, kann jedoch auch als separates Teil in jeder bekannten Art und Weise, beispielsweise durch Einschrauben oder Einsetzen und anschließendes Verschrauben, kraftschlüssig mit dem Hebetisch 7 verbunden werden.

Durch den kegelstumpfförmigen Dorn 28 führt eine weitere Bohrung 29, durch die die Kolbenstange 30 einer in der Kolbenstange 6 angeordneten Kolben-/Zylinder-Anordnung 31 bis in die Hülse 26 bzw. die Bohrung 25 hindurchführt. Am oberen Ende dieser Kolbenstange 30 ist ein Kopf 32 angeordnet, der mittels einer umlaufenden ringförmigen Feder 33 kraftschlüssig in eine entsprechende Nut 34 im oberen Ende der Spreizhülse 27 eingreift. Der Kolben 35 am anderen - unteren - Ende der Kolbenstange 30 steht gegen die Druckkraft eines Satzes von Tellerfedern 36 an, die jedoch mittels der Beaufschlagung des Kolbens 35 mit einem pneumatischen oder hydraulischen Medium auf der dem Satz der Tellerfedern 36 abgewandten Seite des Kolbens 35 teilweise kompensiert werden kann. Die Zu- bzw. Ableitung 37 des fluiden Druckmediums kann sowohl durch die Kolbenstange 6 allein - wie in Fig. 1a dargestellt - als auch durch weitere Teile der Gesamtanordnung - wie in der vorliegenden Fig. 2 dargestellt - verlaufen, um einen optimalen Anschlußort zu definieren, der sowohl in Fig. 1a als auch in Fig. 2 durch den symbolischen Doppelpfeil 38 angedeutet ist.

Die Funktion der Klemmvorrichtung 11 beruht darauf, daß diese normalerweise verriegelt ist, indem der Kolben 35 nur gegen die Druckkraft des Satzes der Tellerfedern 36 ohne Beaufschlagung mit einem fluiden Medium ansteht. Dann erreicht der Kolben 35 und damit auch der Kopf 32 bzw. die Feder 33 seinen bzw. ihren tiefsten Punkt, wobei die Spreizhülse 27 maximal auf den Dorn 28 gezogen und gegen die Hülse 25 gedrückt wird, so daß eine reibschlüssige Verbindung zwischen Bodenstempel 9 und Hebetisch 7 erzielt wird. Zum Entriegeln wird der Kolben 35 mittels eines nicht dargestellten Ventils mit fluidem Druckmedium so beaufschlagt, daß die Druckkraft des Satzes der Tellerfedern 36 so weit kompensiert wird, daß sich der Kolben 35 und damit der Kopf 32 bzw. die Feder 33 in ausreichendem Maße derart nach oben bewegt, daß durch das Abheben der Spreizhülse 27 vom Dorn 28 der Reibschluß zwischen Bodenstempel 9 und Hebetisch 7 verschwindet, so daß der Bodenstempel 9 von der Temperierplatte 8 abgehoben werden kann. Danach kann ein anderer Bodenstempel 9 in der richtigen Positionierung mittels des Positionierstiftes 12 und der Hülse 26 auf die Temperierplatte 8 aufgesetzt und anschließend durch erneute Betätigung des vorgenannten oder eines anderen Ventils zum Beseitigen der Beaufschlagung des Kolbens 35 mit einem fluiden Medium ebenfalls reibschlüssig mit dem Hebetisch 7 verbunden werden. Damit ist dieser Auswechselvorgang beendet.

Fig. 3a zeigt zunächst einen Teil der Formenaufnahme 2 im Querschnitt, die mit einem Paar von Schienen 14 auf bekannte Art und Weise kraftschlüssig verbunden ist und über diese senkrecht zur Bildebene verlaufenden Schienen 14 einen von zwei auf diesen Schienen 14 verfahrbaren Führungsrahmen 13 trägt. An diesen Führungsrahmen 13 ist ein(e) von ihm unterstützte(s) Formenrahmenteil (Formenhälfte) 15 angekoppelt, und zwar über zwei Klemmvorrichtungen 41, 42, die neben einer kraftschlüssigen Verbindung von Führungsrahmen 13 und Formenrahmenteil 15 gleichzeitig eine eindeutige Positionierung des Formenrahmenteils 15 gegenüber dem Führungsrahmen 13 bewirken. Die Bewegung von Führungsrahmen 13 und damit auch von Formenrahmenteil 15 auf den Schienen 14 wird von einem hier nicht dargestellten Antrieb bekannter Art gesteuert, der beispielsweise an der Verbindungsstelle 43 am Führungsrahmen 13 angreifen kann.

Die Klemmvorrichtungen 41, 42 bestehen jeweils aus einer Kolben-/Zylinder-Anordnung 44, deren Kolben 45 in Richtung auf das anzukoppelnde Formenrahmenteil 15 gegen eine Druckkraft ansteht, die beispielsweise durch einen Satz von Tellerfedern 46 oder eine Spiralfeder 47 erzeugt wird. (Die Darstellung zweier verschiedener Ausführungsformen der Druckkrafterzeugung in einer erfindungsgemäßen Vorrichtung erfolgt hier der Demonstration halber; sie ist nicht zwingend!). Gegen die Druckkraft gerichtet ist die Kolbenstange 50, die durch eine Bohrung 51 im Führungsrahmen 13 und eine Schlüssellochbohrung 52 im Formenrahmenteil 15 in eine Hinterschneidung 53 in diesem Formenrahmenteil 15 ragt, wo sie in einem rotationssymmetrischen Kopf 73 endet, der bei entriegelter Klemmvorrichtung 41 oder 42 innerhalb der Hinterschneidng 53 frei verschiebbar ist.

Auf der dem Formenrahmenteil 15 abgewandten Seite ragt der Kolben 45 mittels eines verjüngten Abschnittes 48 durch eine Verschlußklappe 49 hindurch aus dem Führungsrahmen 13 geringfügig heraus, wo dieser verjüngte Abschnitt 48 im hier dargestellten Fall der Ausgangsstellung der Führungsrahmen 13 gegenüber der Formenaufnahme 2 mit seiner Endfläche der Endfläche der Kolbenstange 54 einer jeweils als separater Antriebseinheit angeordneten Kolben-/Zylinder-Anordnung 16 bzw. 17 gegenübersteht. Diese Kolben-/Zylinder-Anordnungen 16, 17 sind auf der Unterseite der gegenüber den Führungsrahmen 13 als ortsfest anzusehenden Formenaufnahme 2 installiert und ragen mit ihren Kolbenstangen 54 durch je eine Bohrung 55 in der Formenaufnahme 2 in den Zwischenraum zwischen Formenaufnahme 2 und Führungsrahmen 13, wobei in der dargestellten Ruhestellung der Kolben-/Zylinder-Anordnungen 16, 17, d.h. in der Verriegelungsstellung der Klemmvorrichtungen 41, 42, kein Kontakt zwischen den Endflächen der jeweiligen verjüngten Kolbenabschnitte 48 und den Endflächen der jeweiligen Kolbenstangen 54 besteht. Die vorgenannte Ruhestellung der Kolben-/Zylinder-Anordnungen 16, 17 wird durch eine entsprechende bekannte Druckbeaufschlagung des jeweiligen Kolbens 56, beispielsweise mittels einer Spiralfeder 57 oder der Zuleitung eines fluiden Druckmediums über die Zu- bzw. Ableitung 58, deren Funktionsweise durch den symbolischen Doppelpfeil 59 veranschaulicht wird, verursacht, während die Kolben-/Zylinder-Anordnungen 16, 17 für ihre Betätigung aus der Ruhelage über die Zu- bzw. Ableitungen 60, deren Funktionsweise durch die symbolischen Doppelpfeile 61 veranschaulicht wird, auf der der Formenaufnahme 2 abgewandten Seite ihrer Kolben 56 mit einem pneumatischen oder hydraulischen Druckmedium beaufschlagt werden können. (Die Darstellung zweier unterschiedlicher Ausführungsformen von möglichen Antriebseinheiten in einer erfindungsgemäßen Vorrichtung erfolgt auch hier nur aus Demonstrationsgründen und ist nicht zwingend!).

Fig. 3b zeigt die Aufsicht auf eine der identischen Ebenen C-C aus Fig. 3a, in der die Schlüssellochbohrung 52 von der zugehörigen Hinterschneidung 53 im Formenrahmenteil 15 her dargestellt ist, wobei zusätzlich die Außenkonturen 63 der über der Bildebene liegenden Hinterschneidung 53 - soweit sie vom Querschnitt der Schlüssellochbohrung 52 abweichen - mittels gestrichelter Linienführung markiert sind, um auf diese Weise den in der Verriegelungsstellung der Klemmvorrichtungen 41, 42 als Auflagefläche für den jeweiligen Kopf 73 der zugehörigen Kolbenstange 50 dienenden Randbereich 62 des schmalen Bereiches der Schlüssellochbohrung 52 zu definieren.

Für das Auswechseln eines Formenrahmenteils 15 in der jeweiligen Formstation wird zunächst der zugehörige Führungsrahmen 13 in seine Ausgangsstellung für einen Produktionszyklus gefahren, in der die Endflächen der Kol benstangen 54 der Kolben-/Zylinder-Anordnungen 16, 17 den Endflächen der verjüngten Abschnitte 48 der Kolben 45 der Klemmvorrichtungen 41, 42 unmittelbar gegenüberstehen. Die Köpfe 73 der zugehörigen Kolbenstangen 50 der Klemmvorrichtungen 41, 42 werden dabei von dem Satz der Tellerfedern 46 (Klemmvorrichtung 41) bzw. von der Spiralfeder 47 (Klemmvorrichtung 42) derart auf die Randbereiche 62 der schmalen Bereiche der Schlüssellochbohrungen 52 gepreßt, daß sie sowohl eine kraftschlüssige als auch eine eindeutig positionierte Verbindung zwischen Führungsrahmen 13 und Formenrahmenteil 15 herstellen. Nunmehr werden die Kolben 56 der Kolben-/Zylinder-Anordnungen 16, 17 über die Zu- bzw. Ableitungen 60 bei gleichzeitiger Entspannung der Zu- bzw. Ableitung 58 mit fluidem Druckmedium beaufschlagt, wodurch die Kolbenstangen 54 und in der Folge auch die Kolbenstangen 50 in Richtung auf die Hinterschneidungen 53 im Formenrahmenteil 15 verschoben werden. Dadurch heben die Köpfe 73 der Kolbenstangen 50 von den Randbereichen 62 der schmalen Bereiche der Schlüssellochbohrungen 52 ab und das Formenrahmenteil 15 läßt sich so verschieben, daß die Köpfe 73 der Kolbenstangen 50 nunmehr direkt über den erweiterten Bereichen der Schlüssellochbohrungen 52 - deren Querschnitt auf jeden Fall größer ist als derjenige der Köpfe 73 - stehen und das Formenrahmenteil 15 über die Köpfe 73 hinweg - im vorliegenden Fall nach oben - abgezogen werden kann. Durch exakte Umkehr der vorgenannten Schritte wird dann ein anderes Formenrahmenteil 15 auf dem Führungsrahmen 13 kraftschlüssig und positioniert befestigt. Das Auswechseln eines Formenrahmenteils 15 ist damit abgeschlossen, ein neuer Produktionszyklus kann gestartet werden.

Fig. 4a zeigt aus der Fig. 1a die Drehkopf-Antriebseinheit 18, deren Achse 22, den Drehkopf 20 und die Klemmvorrichtung 23. Anstelle der beliebig auszugestaltenden Positioniervorrichtung 24 ist hier - und zwar an anderer Stelle - ein Positionierstift 64 dargestellt, der in einem Teil (18 oder 20) durch einen Preßsitz arretiert ist und im anderen Teil (20 oder 18) durch einen Gleitsitz geführt wird. Die Klemmvorrichtung weist wiederum eine Kolben-/Zylinder-Anordnung 65 auf, wobei der Kolben 66 in der Ruhestellung (Verriegelung) gegen die Druckkraft einer Spiralfeder 67 ansteht und von der anderen Seite mit einem fluiden Druckmedium beaufschlagt werden kann, wie es durch den symbolischen Doppelpfeil 68 angedeutet wird. Die Kolbenstange 69 der Kolben-/Zylinder-Anordnung 65 führt durch Bohrungen 70, 71 in der Drehkopf-Antriebseinheit 18 bzw. im Drehkopf 20 und endet hinter dem Drehkopf 20 in einem Kopf 72, der nicht rotationssymmetrisch zur Kolbenstangen-Längsachse ist. Die Bohrung 71 im Drehkopf 20 ist entsprechend unsymmetrisch gestaltet, um den Durchtritt des Kopfes 72 durch die Bohrung 71 zu ermöglichen.

Fig. 4b verdeutlicht diesen Sachverhalt, indem sie die Kolbenstange 69, die Bohrung 71, den Kopf 72 und den Positionierstift 64 in einem Ausschnitt aus dem Drehkopf 20 in der Verriegelungsstellung darstellt, und zwar aus der Sicht des Pfeiles A in Fig. 4a.

Zum Entriegeln der zuletzt erläuterten Klemmvorrichtung wird der Kolben 66 solange mit fluidem Druckmedium gemäß Doppelpfeil 68 beaufschlagt, bis der Kopf 72 das Anheben des Drehkopfes 20 so weit gestattet, daß der Positionierstift 64 freigegeben wird. Dann wird der Drehkopf 20 soweit um seine Rotationsachse geschwenkt, daß die Bohrung 71 über den Kopf 72 gehoben werden kann, womit das Abnehmen des Drehkopfes 20 aus der Formstation beendet ist. Das Einsetzen eines neuen Drehkopfes 20 erfolgt in exakter Umkehr der vorgenannten Schritte.

Selbstverständlich läßt sich die erfindungsgemäße Schnellspannvorrichtung auch durch andere Kombinationen der dargestellten und weiterer gleich wirkender Einzel bausteine der Klemmvorrichtung selbst sowie durch andere Kombinationen der in Frage kommenden Klemmvorrichtungen und Formenteile verifizieren, insbesondere lassen sich bei entsprechenden Platzverhältnissen selbstverständlich auch die getrennten Antriebseinheiten und Klemmvorrichtungen der in der Fig. 3a dargestellten erfindungsgemäßen Vorrichtung zu nur am Führungsrahmen angeordneten Klemmvorrichtungen mit integrierten Antriebseinheiten kombinieren.

**Ansprüche**

1. Schnellspannvorrichtung für Formenteile von Spritzgießmaschinen mit einer oder mehreren schrittweise an einer oder mehreren Spritzeinheit-(en) vorbeibewegbaren Formstation(en), deren Form (jeweils) aus mindestens zwei Formenrahmenteilen, einem Bodenstempel und einem Oberstempel, beispielsweise in Form eines Leistens, besteht, wobei jedes dieser Formenteile an einem zum zweckgerichteten Öffnen und Schließen der jeweiligen Form im Raum verfahrbaren Trägerelement angekoppelt ist,
dadurch gekennzeichnet,
daß die Kopplung zwischen jedem Formenteil (9,15,20) und seinem zugehörigen Trägerelement (7,13,18) mittels einer mit einer geeigneten Antriebseinheit (16,17,31,65) ver- und entriegelbaren Klemmvorrichtung (11,23,41,42) und einer darin integrierten und/oder einer zusätzlichen Positionierhilfe (12,24,64) erfolgt.

2. Schnellspannvorrichtung nach Anspruch 1,
dadurch gekennzeichnet,
daß als Trägerelement für den Oberstempel (21) eine Oberstempelhalterung bzw. - bei Verwendung eines mit jeweils zwei oder mehreren Oberstempeln bestückten Drehkopfes - eine Drehkopf-Antriebseinheit (18) mit weitgehend bekannten Konstruktionsmerkmalen verwendet wird.

3. Schnellspannvorrichtung nach einem der vorangegangenen Ansprüche 1 oder 2,
dadurch gekennzeichnet,
daß als Trägerelement für den Bodenstempel (9) ein Hebetisch (7) mit weitgehend bekannten Konstruktionsmerkmalen dient.

4. Schnellspannvorrichtung nach einem der vorangegangenen Ansprüche 1 bis 3,
dadurch gekennzeichnet,
daß als Trägerelement jedes Formenrahmenteils (15) ein Führungsrahmen (13) mit weitgehend bekannten Konstruktionsmerkmalen verwendet wird.

5. Schnellspannvorrichtung nach Anspruch 3,
dadurch gekennzeichnet,
daß der Hebetisch (7) auf seiner dem Bodenstempel (9) zugewandten Fläche mit einer kraftschlüssig mit ihm verbundenen Temperierplatte (8) versehen ist.

6. Schnellspannvorrichtung nach Anspruch 4,
dadurch gekennzeichnet,
daß jeder Führungsrahmen (13) eine Vorrichtung bekannter Art zum Temperieren des Führungsrahmens (13) und damit des anzukoppelnden Formenrahmenteils (15) einschließt.

7. Schnellspannvorrichtung nach einem der vorangegangenen Ansprüche 1 bis 6,
dadurch gekennzeichnet,
daß jedes Trägerelement (7,13,18) - gegebenenfalls einschließlich einer auf ihm angeordneten Temperierplatte mindestens eine aus ihm in Richtung auf das anzukoppelnde Formenteil (9,15,20) herausragende stiftartige Anordnung (27,28,32,33;50,73;69,72) aufweist, die gemeinsam mit einer korrespondierenden Öffnung (25,26;52,53;71) im anzukoppelnden Formenteil (9,15,20) eine ver- und entriegelbare Klemmvorrichtung (11,23,41,42) darstellt, deren Ver- und Entriegelung mittels einer von der geeigneten Antriebseinheit (16,17,31,65) gesteuerten beschränkten axialen Bewegung der stiftartigen Anordnung oder eines Teiles davon erfolgt.

8. Schnellspannvorrichtung nach einem der vorangegangenen Ansprüche 1 bis 7,
dadurch gekennzeichnet,
daß die geeignete Antriebseinheit (16,17) eine unabhängig vom Trägerelement (13) am Rahmen (1) bzw. an der Formenaufnahme (2) der Formstation angeordnete pneumatische oder hydraulische Kolben-/Zylinder-Anordnung (16,17) ist, deren Kolbenstange (54) die beschränkte axiale Bewegung der stiftartigen Anordnung (50,73) oder eines Teiles davon nur in einer vorgegebenen Ausgangsstellung des Trägerelements (13) im Verhältnis zum Rahmen (1) bzw.der Formenaufnahme (2) der Formstation bewirkt.

9. Schnellspannvorrichtung nach einem der vorangegangenen Ansprüche 1 bis 7,
dadurch gekennzeichnet,
daß die geeignete Antriebseinheit eine am oder im Trägerelement (7,18) angeordnete pneumatische oder hydraulische Kolben-/Zylinder-Anordnung (31,65) ist.

10. Schnellspannvorrichtung nach Anspruch 8 oder 9,
dadurch gekennzeichnet,
daß der Kolben (56) der pneumatischen oder hydraulischen Kolben-/Zylinder-Anordnung (17) von beiden Seiten mit dem pneumatischen oder hydraulischen Medium beaufschlagbar ist.

11. Schnellspannvorrichtung nach Anspruch 8 oder 9,

dadurch gekennzeichnet,
daß der Kolben (35,56,66) der pneumatischen oder hydraulischen Kolben-/Zylinder-Anordnung (16,31,65) nur von einer Seite mit dem pneumatischen oder hydraulischen Medium beaufschlagbar ist, jedoch ständig gegen einen - beispielsweise durch eine Spiralfeder (57,67) oder einen Satz von Tellerfedern (36) hervorgerufenen - Druckwiderstand ansteht.

12. Schnellspannvorrichtung nach einem der vorangegangenen Ansprüche 9 bis 11,
dadurch gekennzeichnet,
daß die Kolbenstange (30,69) der pneumatischen oder hydraulischen Kolben-/Zylinder-Anordnung (31,65) unmittelbar mit der stiftartigen Anordnung (27,28,32,33;69,72) oder dem für eine beschränkte axiale Bewegung vorgesehenen Teil davon kraftschlüssig verbunden ist.

13. Schnellspannvorrichtung nach einem der vorangegangenen Ansprüche 7 bis 12,
dadurch gekennzeichnet,
daß die stiftartige Anordnung (27,28,32,33) aus einem ortsfest mit dem Trägerelement (7) verbundenen konisch zulaufenden Dorn (28) und einer darauf verschiebbaren Spreizhülse (27) und die korrespondierende Öffnung (25,26) durch eine Sacklochbohrung gebildet wird.

14. Schnellspannvorrichtung nach einem der vorangegangenen Ansprüche 7 bis 12,
daß die stiftartige Anordnung (50,73;69,72) einen zylinderförmigen Bolzen mit einem gegenüber der Bolzenlängsachse nicht notwendig rotationssymmetrischen Bolzenkopf (72,73) und die korrespondierende Öffnung (52,53;71) eine nicht rotationssymmetrische Bohrung darstellt.

15. Schnellspannvorrichtung nach Anspruch 14,
dadurch gekennzeichnet,
daß die nicht rotationssymmetrische Bohrung (71) ein durch das anzukoppelnde Formenteil (20) hindurchführendes Langloch ist.

16. Schnellspannvorrichtung nach Anspruch 14,
dadurch gekennzeichnet,
daß die nicht rotationssymmetrische Bohrung (52,53) eine im anzukoppelnden Formenteil (15) hinterschnittene Bohrung mit Schlüsselloch-Querschnitt (Bajonett-Verschluß) ist.

17. Schnellspannvorrichtung nach einem der vorangegangenen Ansprüche 1 bis 16,
dadurch gekennzeichnet,
daß als Positionierhilfe eine im Abstand von einer ersten Klemmvorrichtung (41) angeordnete zweite Klemmvorrichtung (42) zum Ankoppeln eines Formenteiles (15) an ein Trägerelement (13) verwendet wird.

18. Schnellspannvorrichtung nach einem der vorangegangenen Ansprüche 1 bis 17,
dadurch gekennzeichnet,
daß im Abstand von einer oder mehreren Klemmvorrichtung(en) (11,23) zwischen einem Trägerelement (7,18) und seinem anzukoppelnden Formenteil (9,20) zwischen diesen gleichzeitig eine Anordnung aus einem kraftschlüssig mit dem Trägerelement oder dem Formenteil verbundenen dornartigen Fortsatz und einer korrespondierenden Öffnung in der gegenüberliegenden Oberfläche des Formenteiles oder des Trägerelementes als Positionierhilfe (12,24,64) wirksam wird.

19. Schnellspannvorrichtung nach Anspruch 18,
dadurch gekennzeichnet,
daß der dornartige Fortsatz ein mit Preßsitz in einer Sacklochbohrung des Trägerelementes (7,18) oder des anzukoppelnden Formenteiles (9,20) arretierter Zentrierstift und die korrespondierende Öffnung eine Sacklochbohrung mit Gleitsitz für den Zentrierstift in der gegenüberliegenden Oberfläche des Formenteiles (9,20) oder des Trägerelementes (7,18) ist.

F i g .1a

Fig.1b

# Fig.2

Fig.3a

Fig.3b

EP 0 413 149 A2

Fig.4a

Fig.4b